# FASCICULE DE BREVET EUROPEEN

(11) **EP 1 900 208 B1**
(45) Date de publication et mention de la délivrance du brevet: **10.12.2014**
(21) Numéro de dépôt: 06764060.7
(22) Date de dépôt: 04.07.2006
(51) Int. Cl.: H04N 21/643, H04N 21/266, H04N 21/414, H04N 21/438, H04N 7/16

(54) **MÉTHODE DE TRANSMISSION D'UN FLUX DE DONNÉES NUMÉRIQUES ET DE MESSAGES DE CONTRÔLE ASSOCIÉS AUDIT FLUX À DESTINATION D'ÉQUIPEMENTS MOBILES**
VERFAHREN ZUR ÜBERTRAGUNG AN MOBILE GERÄTE EINES DIGITALEN DATENSTROMES UND MIT DEM DATENSTROM VERBUNDENER KONTROLLNACHRICHTEN
METHOD FOR TRANSMITTING A DIGITAL DATA STREAM AND CONTROL MEESSAGES ASSOCIATED WITH THE DATA STREAM TO MOBILE DEVICES

(30) Priorité: 06.07.2005 EP 05291468
(43) Date de publication de la demande: 19.03.2008
(73) Titulaire: Nagra France SAS, 92130 Issy-les-Moulineaux (FR)
(72) Inventeur: WENDLING, Bertrand, F-78220 Viroflay (FR)
(74) Mandataire: Leman Consulting S.A.
(86) Numéro de dépôt international: PCT/EP2006/063864
(87) Numéro de publication internationale: WO 2007/003641

(56) Documents cités:
- EP-A- 1 447 983
- US-A- 5 349 641
- US-A1- 2003 152 364
- "Digital Video Broadcasting (DVB); DVB-H Implementation Guidelines; ETSI TR 102 377" ETSI STANDARDS, EUROPEAN TELECOMMUNICATIONS STANDARDS INSTITUTE, SOPHIA-ANTIPO, FR, vol. BC, no. V111, février 2005 (2005-02), XP014027140 ISSN: 0000-0001

## Description

### Domaine de l'invention

La présente invention concerne le domaine de la diffusion par voie hertzienne d'un flux de données numériques selon une norme du type DVB-H (Digital Video Broadcast, Handheld) ou similaire. Le flux est reçu par des équipements mobiles, tels que, par exemple, un téléphone portable, un assistant personnel PDA (Personal Digital Assistant), un récepteur portable de télévision numérique, un ordinateur portable.

Les données diffusées sont en général cryptées et ne peuvent être reçues en clair que par des équipements autorisés dont l'utilisateur a acquis les droits nécessaires. Ces droits, stockés dans un module de sécurité associé à l'équipement mobile, consistent en un ensemble de clés permettant de décrypter des mots de contrôles contenus dans des messages de contrôle ECM (Entitlement Control Message) qui accompagnent les données diffusées.

Un module de sécurité est un dispositif réputé inviolable contenant diverses clés d'encryption/décryption, des informations servant à identifier un utilisateur sur un réseau et des données qui définissent des droits acquis par l'utilisateur pour la réception d'un contenu diffusé. Le module de sécurité peut se trouver sous différentes formes telles qu'une carte à puce amovible insérée dans un lecteur, un circuit intégré soudé sur une carte mère, une carte du type SIM (Subscriber Identity Module) que l'on rencontre dans la plupart des équipements mobiles.

### Arrière-plan technique

La technologie DVB-H est issue de la norme DVB-T (Digital Video Broadcast, Terrestrial) avec laquelle elle est largement compatible tout en possédant des caractéristiques particulières dépendant essentiellement des propriétés des équipements de réception mobiles.

Un problème connu des équipements mobiles DVB-H est la capacité limitée des batteries. En effet, la compatibilité avec la norme DVB-T exige des mécanismes de démodulation et de décodage du flux à large bande et à haut débit de données (jusqu'à 10 Mbit/s par canal) qui entraînent une grande consommation d'énergie des circuits électroniques concernés. La solution adoptée pour diminuer la consommation est la transmission du flux non plus en continu mais par salves (burst). L'équipement mobile de réception n'est alors enclenché que périodiquement pour recevoir les salves et en mode veille (standby) pendant les interruptions. Ce mode particulier au DVB-H permet ainsi de réduire la consommation de l'équipement mobile d'un facteur dix ou plus.

Le flux diffusé comprend en général plusieurs services multiplexés comme par exemple un contenu audio/vidéo, des fichiers ou des applications logicielles à télécharger. Dans le mode DVB-T, le flux dans son ensemble est décodé avant de pouvoir accéder à un service sélectionné. L'économie d'énergie réalisée par le mode DVB-H est basée sur le fait que seules les parties du flux contenant les données d'un service sélectionné sont traitées, ce qui nécessite une réorganisation appropriée du flux. Le multiplexage des services est alors effectué selon un échantillonnage temporel (time slicing). Les données d'un service particulier ne sont pas transmises de manière continue mais en salves compactes périodiques avec des interruptions entre les salves.

Dans le cas de la télévision numérique à péage à accès conditionnel, le flux de données comprend le contenu audio/vidéo crypté, des messages de contrôles et des messages d'administration. Les messages de contrôle ECM (Entitlement Control Message) contiennent des mots de contrôle servant à décrypter le contenu audio/vidéo. Dans le mode DVB-T où le flux est transmis de manière continue la décryption est effectuée par un décodeur en direct à la réception des données ou en différé après stockage de tout ou partie du flux. Les messages de contrôle sont décryptés pour permettre l'extraction des mots de contrôle servant à décrypter le contenu diffusé. Afin de synchroniser les messages de contrôle avec le contenu diffusé ou enregistré diverses solutions ont été développées parmi lesquelles on peut citer:
- Le document US2003152364 qui propose l'introduction de plusieurs mots de contrôle dans un message de contrôle ECM. Un tel message contient le mot de contrôle courant pour décrypter le bloc de donnée en cours, les mots de contrôle précédent et suivant ce mot courant pour décrypter un flux enregistré et ceci dans les modes recul ou avance rapide d'un enregistreur audio/vidéo numérique.
- Le document EP1447983 qui traite de la création d'une table de correspondance entre portions de flux enregistré et messages de contrôle accompagnant les parties enregistrées du flux.
- Le document EP0583202 qui décrit la transmission avec chaque programme d'un message de contrôle propre à ce programme avec une certaine fréquence et les messages de contrôle propres aux autres programmes avec une fréquence plus faible. Le message de contrôle du programme sélectionné sert à le décrypter en direct et les autres messages de contrôle sont stockés pour pouvoir procéder rapidement au décryptage d'un autre programme qui viendrait à être sélectionné.

Dans la technologie du DVB-H, le flux comprend une pluralité de services transmis par salves successives contenant le contenu crypté (programmes audio/vidéo numériques, fichiers ou applications logicielles, etc.) et les messages de contrôle nécessaires à la décryption du contenu. Lors d'un passage d'un service à un autre ou lors d'interruptions de la réception du flux, il est possible de recevoir des salves de contenu sans recevoir les messages de contrôle correspondants. Ce problème est issu du fait que les salves de messages de contrôle ne sont pas synchronisées avec celles du contenu. Chaque salve étant transmise sous forme de paquets IP (Internet Protocol) indépendants. Lorsque le récepteur est verrouillé sur un canal donné, ce décalage n'a pas d'importance car les mots de contrôle contenus dans les messages de contrôle concernent des blocs transmis ultérieurement par rapport aux blocs courants. Dans le cas par exemple de changements successifs de service ou de canal (zapping) des salves de contenu peuvent être reçues sans pouvoir être décryptées par un mot de contrôle à cause de la non-réception du ou des messages de contrôle correspondants due à l'absence de synchronisation des services "contenu" et "messages de contrôle".

Les solutions de l'art antérieur selon les exemples cités plus haut ne s'appliquent pas au cas où le flux est composé de salves correspondants à des services indépendants. Du fait que l'équipement mobile n'est activé que pour les services sélectionnés, il ne peut pas recevoir des données des autres services comme dans le cas d'un flux continu et d'un récepteur activé pour recevoir tous les services du flux. En effet dans le mode DVB-T, le flux est décodé dans son ensemble pour accéder à un service donc les messages de contrôles peuvent être reçus constamment même si l'on commute d'un service à un autre.

Dans le document de la norme ETSI TR 102 377 "DVB-H Implementation Guidelines", l'équipement mobile récepteur doit recevoir les messages de contrôle ECM avant les salves. La solution proposée consiste à activer le récepteur avant la réception d'une salve afin d'attendre l'arrivée de messages ECM. Ces messages sont transmis en continu indépendamment des flux de salves et l'intervalle de temps minimum entre les messages doit être inférieur à la durée d'une salve.

### Description sommaire de l'invention

Le but de la présente invention est de pallier l'absence de synchronisation entre les salves de différents services transmises dans un flux destiné à des équipements mobiles DVB-H.

Un autre but est d'assurer une réception optimale du contenu en permettant une décryption de toutes les salves malgré des passages fréquents d'un service à un autre, la perte ou la corruption de la réception de messages de contrôle.

Ces buts sont atteints par une méthode de transmission d'un flux de données numériques et de messages de contrôle associés audit flux à destination d'équipements mobiles, ledit flux comprenant des salves, successives de données d'un service prédéterminé comprenant un contenu encrypté avec des mots de contrôle inclus dans les messages de contrôle transmis en parallèle avec le flux, ladite méthode est caractérisée en ce qu'elle comprend les étapes suivantes:
- recevoir et stocker un message de contrôle dans une mémoire,
- extraire le message de contrôle de la mémoire et insérer ledit message de contrôle dans chaque salve de contenu du service à transmettre, ledit message contenant au moins un mot de contrôle destiné à décrypter le contenu de ladite salve,
- répéter les opérations précédentes de stockage, d'extraction et d'insertion lors de chaque réception d'un nouveau message de contrôle.

La solution consiste à associer en quelque sorte les salves d'un contenu avec les messages de contrôle servant à décrypter le contenu de ces salves. Le message de contrôle est en général placé en tête de la partie utile de la salve, c'est-à-dire après les données d'identification de la salve. Ainsi lors d'un changement de service les messages de contrôles restent toujours disponibles sans devoir attendre leur réception à partir d'autres salves. Les données du contenu peuvent être décryptées dès la réception de la première salve sans interruption ou de brouillage causé par la réception de salves cryptées sans possibilité de les décrypter.

Afin d'assurer la continuité du décryptage en cas de coupures intempestives de la transmission, le message de contrôle associé à une salve peut contenir des mots de contrôles supplémentaires permettant de décrypter les salves suivantes reçues après la coupure. L'équipement mobile peut en effet comporter une mémoire servant à stocker temporairement des mots de contrôle valables pour décrypter un certain nombre de salves à recevoir ultérieurement pour un service donné.

### Brève description des figures

L'invention sera mieux comprise grâce à la description détaillée qui va suivre et qui se réfère aux figures annexées données à titre d'exemples nullement limitatifs.
- La figure 1 illustre un schéma d'un flux DVB-H où les services sont transmis en salves
- la figure 2 montre un schéma d'un flux où les salves des différents services forment un flux continu.
- la figure 3 illustre une salve comprenant un message de contrôle inséré selon l'invention.
- la figure 4 illustre un schéma d'un flux où les salves comprennent chacune un message de contrôle.
- la figure 5 montre un message de contrôle comprenant plusieurs mots de contrôle
- la figure 6 illustre un schéma des étapes de la méthode de l'invention dans laquelle des messages ECM sont stockés dans une mémoire puis insérés dans les salves des services correspondants.

### Description détaillée de l'invention

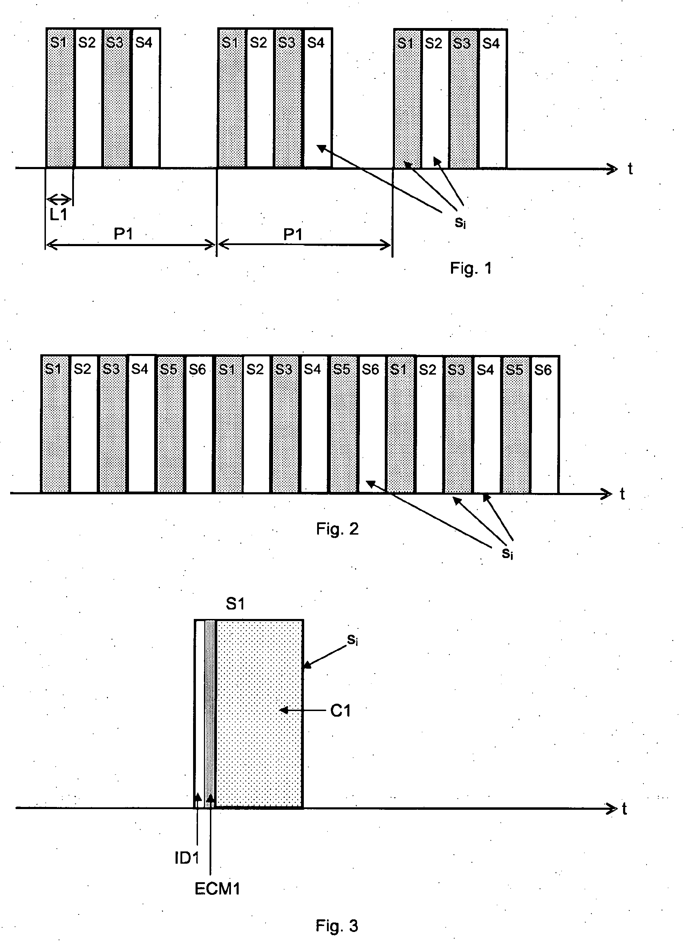

En mode DVB-H, les différents services (S1, S2, S3, S4) multiplexés d'un flux de données numériques sont diffusés par salves (sᵢ) périodiques. Pour des raisons d'économie d'énergie évoquées plus haut, l'équipement mobile n'est activé que lors de la réception d'un ou plusieurs services. Par exemple, dans la figure 1, l'équipement n'est actif que pendant la durée (L) d'un service (S1) et ceci pendant des intervalles périodiques (P), tandis qu'il sera en veille durant les intervalles séparant les salves du service (S1).

Le multiplexage des services peut entraîner à nouveau un flux continu et ininterrompu transmis avec un débit constant lorsque des salves de services additionnels sont transmises pendant les périodes d'interruption. La figure 2 montre un exemple où les intervalles entre S4 et S1 de la figure 1 sont comblés par des services supplémentaires S5 et S6. Ce type de flux est reçu de manière intermittente par l'équipement mobile qui se synchronise aux salves (sᵢ) d'un ou plusieurs services sélectionnés et commute en mode veille lorsque d'autres services sont transmis. Le rapport entre la période d'interruption entre les salves (sᵢ) et la période d'activité de l'équipement mobile lors de la réception de services sélectionnés donne une mesure de l'économie d'énergie du mode DVB-H.

La durée (L) d'une salve (sᵢ) est de l'ordre de quelques centaines de milli-secondes tandis que la période (P) intermédiaire d'interruption peut durer jusqu'à quelques secondes. Le rapport entre ces durées peut donc atteindre plus de 90% suivant la configuration des salves (sᵢ) du signal diffusé et le nombre de services sélectionnés.

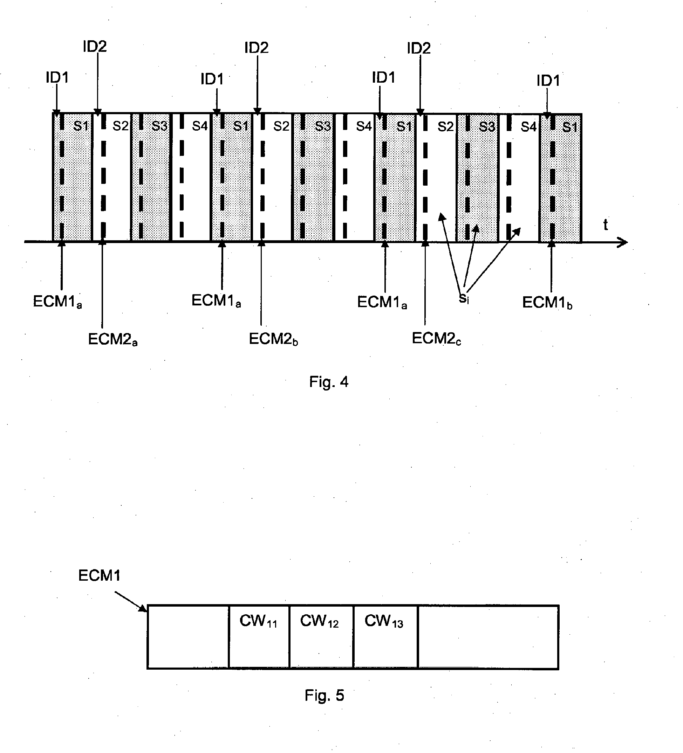

La méthode de l'invention est illustrée par la figure 4 montrant qu'un message de contrôle ECM est inséré dans chaque salve (sᵢ) d'un service (S1, S2,...). Selon une réalisation préférée, le message de contrôle est placé au niveau de l'entête de la salve (sᵢ) à la suite de l'identificateur ID et avant le contenu (C1) crypté ou utile de la salve (sᵢ). La figure 3 montre une vue agrandie d'une salve (sᵢ) du service S1 contenant un message de contrôle ECM1 après l'identificateur ID1 de la salve (sᵢ).

Cet identificateur ID1 est utilisé par l'équipement mobile pour se synchroniser sur le service sélectionné et pour déterminer les périodes d'activation et de mise en veille. Le message de contrôle ECM1 contient au moins un mot de contrôle permettant de décrypter les données du contenu (C1) du service S1 auquel il est associé.

Dans un flux de salves (sᵢ) de plusieurs services (S1, S2,...) multiplexés tel que schématisé sur la figure 4, les messages de contrôles, respectivement les mots de contrôle qui y sont inclus peuvent changer d'une salve d'un même service à une autre ou d'un groupe de salve à un autre. Par exemple, pour le service S1, le message de contrôle ECM1ₐ reste constant pendant trois salves pour changer par la suite (ECM1_{B}). Il est aussi envisageable de changer de mot de contrôle à chaque salve comme pour le service S2 de l'exemple où les messages de contrôle (ECM2ₐ, ECM2_{b}, ECM2_{c},...) sont insérés au début des salves ne sont jamais identiques.

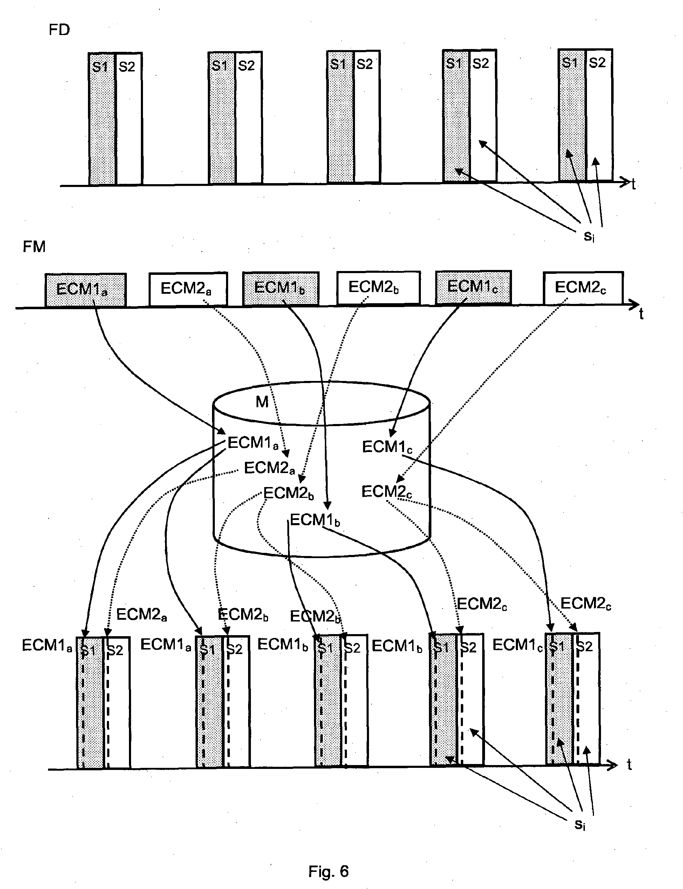

Le schéma de la figure 6 montre un flux de données (FD) comprenant des salves (sᵢ) de deux services (S1, S2) et un flux (FM) de messages de contrôle ECM associés aux services (S1, S2) du flux (FD). Les messages de contrôle (ECM1ₐ, ECM1_{b}, ECM1_{c}, ...) et (ECM2ₐ, ECM2_{b}, ECM2_{c}, ...) servant à décrypter I respectivement les données encryptées des services (S1) et (S2) sont stockés dans une mémoire (M) puis extraits afin de les insérer dans les salves (sᵢ) correspondantes de chaque service (S1, S2). Un même message ECM est inséré dans plusieurs salves (sᵢ) consécutives d'un service jusqu'à l'arrivée d'un nouveau message ECM concernant ce service. Dans l'exemple de la figure 6, les messages ECM1ₐ et ECM1_{b} sont répétés dans deux salves (sᵢ) consécutives du service (S1) et le message ECM1_{c} est introduit dans la ou les salves (sᵢ) suivantes jusqu'à la réception du message suivant et ainsi de suite. De manière analogue, les messages de contrôle (ECM2ₐ, ECM2_{b}, ECM2_{c}, ...) du service (S2) sont introduits dans les salves respectives. Selon une configuration préférée, les messages sont placés en tête des salves (sᵢ) afin de réduire le délai d'accès aux contenu des salves (sᵢ) lors du zapping (passage rapide du service (S1) au service (S2) et inversement). Il est à noter que les messages ECM stockés dans la mémoire (M) sont effacés au fur et à mesure de l'arrivée des nouveaux messages associés à un service donné. En d'autres termes, un message ECM est conservé aussi longtemps qu'il est utilisé pour être introduit dans des salves (sᵢ) et ceci jusqu'à la réception d'un nouveau message, par exemple le message ECM1ₐ est remplacé par le message ECM1_{b}.

Le document de la norme ETSI TR 102 377 "DVB-H Implementation Guidelines", ne prévoit pas cette méthode de transmission des messages ECM dans les salves (sᵢ) des services (S1, S2,...). Ils sont transmis dans un flux indépendant (FM) en parallèle au flux (FD) des salves (sᵢ) de contenu. Selon ce document, la transmission des salves et des messages est donc simplifiée car elle ne nécessite ni mémoire, ni dispositif de lecture de la mémoire et d'introduction des messages dans les salves appropriées. De plus, la configuration de l'équipement mobile de réception est également différente pour permettre la réception permanente du flux de messages tout en étant synchronisée avec les salves des services dont le contenu est à décrypter.

L'insertion du message de contrôle au début de la salve permet d'obtenir immédiatement un mot de contrôle lorsque l'équipement mobile commute d'un service à un autre. En effet après avoir lu l'identificateur (ID1, ID2), il extrait le mot de contrôle nécessaire du message de contrôle ECM pour décrypter les données du contenu qui suivent dans la salve. Le mot de contrôle extrait peut être stocké dans une mémoire temporaire de l'équipement mobile afin d'être utilisé pour des prochaines salves lorsqu'un certain nombre de celles-ci contiennent un même message de contrôle comme dans le cas du service S1 de l'exemple.

Dans une réalisation audio/vidéo par exemple où les différents services représentent chacun un canal de télévision, et grâce au message de contrôle précédant les données cryptées, il devient aisé de passer d'un canal à un autre et vice-versa sans interruption (blackout) de l'image ou du son. Le mot de contrôle servant à décrypter les données audio/vidéo est ainsi immédiatement disponible à l'unité de décryption de l'équipement mobile.

Un message de contrôle ECM peut contenir plusieurs mots de contrôle comme schématisé dans la figure 5. Afin d'augmenter la vitesse de traitement des salves, l'équipement mobile stocke plusieurs mots de contrôle (CW₁₁, CW₁₂, CW₁₃) relatifs à un service S1 donné et correspondant à une série de salves de ce service. Selon la configuration matérielle et logicielle (algorithme de décryptage) de l'équipement mobile, il est plus rapide d'extraire un certain nombre de mots de contrôle d'un ou de plusieurs messages et de les stocker que de les extraire chaque fois du message transmis avec les salves. L'équipement mobile extrait des mots de contrôle à partir d'un certain nombre de salves pour les stocker, lorsque ces mots stockés deviennent obsolètes, il extrait et stocke de nouveaux mots à partir des salves suivantes et ainsi de suite.

Le message de contrôle peut aussi contenir en sus du mot de contrôle courant servant à décrypter la salve de données en cours, les mots de contrôle de salves précédentes et ultérieures. Cette variante se révèle utile lorsque l'équipement mobile est pourvu d'une unité de stockage de masse apte à enregistrer tout ou partie des données diffusées. En effet, la mise à disposition de ces mots de contrôle particuliers permet d'effectuer une exploration rapide en avant ou en arrière des données cryptées enregistrées.

## Revendications

1. Méthode de transmission d'un flux de données (FD) numériques et de messages de contrôle (ECM1a, ECM1b, ...) associés audit flux (FD) à destination d'équipements mobiles, ledit flux (FD) comprenant des salves (sᵢ) successives de données d'un service prédéterminé (S1) comprenant un contenu encrypté avec des mots de contrôle (CW) inclus dans les messages de contrôle (ECM1a, ECM1b, ...) transmis en parallèle avec le flux (FD), ladite méthode est **caractérisée en ce qu'**elle comprend les étapes suivantes:
- recevoir et stocker un message de contrôle (ECM1 a) dans une mémoire (M),
- extraire le message de contrôle (ECM1a) de la mémoire (M) et insérer ledit message de contrôle (ECM1 a) dans chaque salve (sᵢ) de contenu du service (S1) à transmettre, ledit message contenant au moins un mot de contrôle destiné à décrypter le contenu de ladite salve (sᵢ),
- répéter les opérations précédentes de stockage, d'extraction et d'insertion lors de chaque réception d'un nouveau message de contrôle (ECM1b, ECM1c).

2. Méthode selon la revendication 1, **caractérisée en ce qu'**elle consiste à insérer le message de contrôle (ECM1a, ECM1b, ...) dans l'entête de la salve (sᵢ) entre un identificateur (ID) de ladite salve (sᵢ) et les données du contenu.

3. Méthode selon la revendication 1, **caractérisée en ce qu'**elle consiste à insérer un même message de contrôle (ECM1a, ECM1b, ...) dans des salves (sᵢ) d'un groupe prédéfini et appartenant au même service (S1) ledit message (ECM1 a, ECM1b, ...) contenant un mot de contrôle (CW) destiné à décrypter le contenu de chaque salve (sᵢ) du groupe.

4. Méthode selon la revendication 1, **caractérisée en ce qu'**elle consiste à insérer un message de contrôle (ECM1a, ECM1b, ...) propre à chaque salve (sᵢ) du service (S1) prédéterminé.

5. Méthode selon la revendication 1, **caractérisée en ce qu'**elle consiste à inclure plusieurs mots de contrôle (CW11, CW12,...) dans un message de contrôle (ECM1a, ECM1b, ...), lesdits mots de contrôle (CW11, CW12,...) extraits et stockés par l'équipement mobile étant destinés à décrypter le contenu de la salve (sᵢ) courante et le contenu de chaque salve (sᵢ) ultérieures du service (S1) prédéterminé.

6. Méthode selon la revendication 1, **caractérisée en ce qu'**elle consiste à inclure dans le message de contrôle (ECM1a, ECM1b, ...), en sus du mot de contrôle (CW11, CW12,...) courant servant à décrypter la salve (sᵢ) courante, les mots de contrôle (CW11, CW12,...) de salves précédentes et ultérieures du service (S1) prédéterminé.

## Patentansprüche

1. Verfahren zur Übertragung eines digitalen Datenflusses (FD) und von Kontrollnachrichten (ECM1a, ECM1b, ...), die mit dem genannten Fluss (FD) verbunden sind, an Mobilgeräte, wobei der Fluss (FD) aufeinanderfolgende Bursts (sᵢ) von Daten von einem vorgegebenen Dienst (S1) enthält, mit einem verschlüsselten Inhalt mit Kontrollwörtern (CW), die in den Kontrollnachrichten (ECM1a, ECM1b, ...) enthalten sind und parallel mit dem Fluss (FD) übertragen werden, wobei das Verfahren **dadurch gekennzeichnet ist, dass** es die folgenden Schritte umfasst:
- eine Kontrollnachricht (ECM1 a) empfangen und in einem Speicher (M) speichern,
- die Kontrollnachricht (ECM1a) des Speichers (M) extrahieren und besagte Kontrollnachricht (ECM1a) in jeden zu übertragenden Inhaltsburst (sᵢ) des Dienstes (S1) einsetzen, wobei die Nachricht mindestens ein Kontrollwort enthält, um den Inhalt des Bursts (sᵢ) zu entschlüsseln,
- Wiederholen der vorherigen Operationen Speichern, Extraktion und Einfügung bei jedem Empfang einer neuen Kontrollnachricht (ECM1b, ECM1c).

2. Verfahren nach Anspruch 1, **dadurch gekennzeichnet, dass** es darin besteht, die Kontrollnachricht (ECM1a, ECM1b, ...) in die Kopfzeile des Bursts (sᵢ) zwischen einen Identifikator (ID) des Bursts (sᵢ) und die Daten des Inhalts einzusetzen.

3. Verfahren nach Anspruch 1, **dadurch gekennzeichnet, dass** es darin besteht, dieselbe Kontrollnachricht (ECM1a, ECM1b, ...) in Bursts (sᵢ) einer vorherbestimmten Gruppe einzusetzen, die demselben Dienst (S1) angehört, wobei die Nachricht (ECM1a, ECM1b, ...) ein Kontrollwort (CW) enthält, um den Inhalt jedes Bursts (sᵢ) der Gruppe zu entschlüsseln.

4. Verfahren nach Anspruch 1, **dadurch gekennzeichnet, dass** es darin besteht, eine Kontrollnachricht (ECM1a, ECM1b, ...) einzusetzen, die jedem Burst (sᵢ) des vorgegebenen Dienstes (S1) zueigen ist.

5. Verfahren nach Anspruch 1, **dadurch gekennzeichnet, dass** es darin besteht, mehrere Kontrollwörter (CW11, CW12,...) in eine Kontrollnachricht (ECM1a, ECM1b, ...) einzuschließen, wobei die Kontrollwörter (CW11, CW12,...), extrahiert und gespeichert vom Mobilgerät, den Inhalt des laufenden Bursts (sᵢ) entschlüsseln sollen wie auch den Inhalt jedes weiteren Bursts (sᵢ) des vorgegebenen Dienstes (S1).

6. Verfahren nach Anspruch 1, **dadurch gekennzeichnet, dass** es darin besteht, in die Kontrollnachricht (ECM1a, ECM1b, ...), neben dem laufenden Kontrollwort (CW11, CW12,...) mit dem Zweck, den laufenden Burst (sᵢ) zu entschlüsseln, auch die Kontrollwörter (CW11, CW12,...) vorheriger und weiterer Bursts des vorgegebenen Dienstes (S1) einzuschließen.

## Claims

1. Method for transmitting a digital data stream (FD) and control messages (ECM1 a, ECM1 b, ...) associated to said stream (FD) intended for mobile equipments, said stream (FD) comprising successive data bursts (sᵢ) of a predetermined service (S1) comprising a content encrypted with control words (CW) included in the control messages (ECM1a, ECM1b,...) transmitted in parallel with the stream (FD), said method is **characterized in that** it comprises the following steps:
- receiving and storing a control message (ECM1a) in a memory (M),
- extracting the control message (ECM1 a) from the memory (M) and inserting said control message (ECM1a) in each burst (sᵢ) of content of the service (S1) to be transmitted, said message containing at least one control word intended to decrypt the content of said burst (sᵢ),
- repeating the preceding operations of storage and insertion during each reception of a new control message (ECM1b, ECM1c,...).

2. Method according to claim 1, **characterized in that** it consists of inserting the control message (ECM1a, ECM1b, ...) in the header of the burst (sᵢ) between an identifier (ID) of said burst (sᵢ) and the content data.

3. Method according to claim 1, **characterized in that** it consists of inserting a same control message (ECM1a, ECM1 b, ...) into bursts (sᵢ) of a predefined group belonging to the same service (S1), said message (ECM1 a, ECM1 b, ...) containing a control word (CW) intended to decrypt the content of each burst (sᵢ) of the group.

4. Method according to claim 1, **characterized in that** it consists of inserting a control message (ECM1 a, ECM1 b, ...) pertaining to each burst (sᵢ) of the predetermined service (S1).

5. Method according to claim 1, **characterized in that** it consists of including several control words (CW11, CW12,...) into a control message (ECM1a, ECM1b, ...), said control words (CW11, CW12,...) extracted and stored by the mobile equipment being intended to decrypt the content of the current burst (sᵢ) and the content of the further bursts (sᵢ) of the predetermined service (S1).

6. Method according to claim 1, **characterized in that** it consists of including into the control message (ECM1 a, ECM1b,...), in addition to the current control word (CW11, CW12,...) for decrypting the current burst (sᵢ), the control words (CW11, CW12,...) of previous and further bursts of the predetermined service (S1).
